# EUROPEAN PATENT APPLICATION

(11) **EP 4 636 013 A1**
(43) Date of publication of application: **22.10.2025**
(21) Application number: 25169593.8
(22) Date of filing: 09.04.2025
(51) Int. Cl.: C08J 3/075, C08J 3/24, C08J 3/12, C08F 301/00, B01J 39/00, C08F 2/00, C08L 33/02, B01J 20/26, C08F 2/10

(54) **SUPERABSORBENT POLYMER COMPOSITION, MODIFIED SUPERABSORBENT POLYMER COMPOSITION AND METHOD OF MANUFACTURING THE SAME**

(30) Priority: 19.04.2024 TW 113114663
(71) Applicant: Formosa Plastics Corporation, Kaohsiung City (TW); The Texas A&M University System, Bryan, TX 300 (US)
(72) Inventor: HSU, Yu-Cheng, Kaohsiung City (TW); LEE, Cheng-Lin, Kaohsiung City (TW); SUE, Hung-Jue, College Station, TX 77845 (US); HWANG, Long-Tyan, Kaohsiung City (TW)
(74) Representative: Lang, Christian

(57) **Abstract**

The present invention is related to a superabsorbent polymer composition, a modified superabsorbent polymer composition, and a method of manufacturing the same. The superabsorbent polymer composition can be obtained by having specific monomers perform a chain-growth polymerization on active functional groups of nanometer gel particles that are made of the same monomer. Therefore, mass production of the superabsorbent polymer composition can be simplified, and the obtained superabsorbent polymer composition can have more excellent water absorbency and water retention, thereby being used to make a superabsorbent product.

## Description

### BACKGROUND

### Field of Invention

The present invention relates to a superabsorbent polymer. More particularly, the present invention relates to a superabsorbent polymer composition, a modified superabsorbent polymer composition, and a method of manufacturing the same by using nanometer gel particles to perform crosslinking.

### Description of Related Art

A superabsorbent polymer material is a material that has excellent water absorbency and water retention. The superabsorbent polymer material can absorb water solution with a weight that is tens or even hundreds of times its weight and is thus often used to manufacture superabsorbent products. The superabsorbent polymer material is widely applied in the industries of manufacturing hygiene supplies (such as baby diapers, sanitary products, disposable wipes and/or adult diapers), agriculture (such as water retaining agents and/or fertilizer retaining agents), food (such as packages of fresh food), environmental engineering (such as flood bags), building material (such as anti-dew condensation agents) and/or oil gathering (such as water remover).

With carboxyl groups, polyacrylic acid has excellent water absorbency and thus can be used to manufacture the superabsorbent polymer material. Typically, a conventional crosslinking agent can be used to make the superabsorbent polymer material by performing a crosslinking reaction on the polyacrylic acid, thereby enhancing the strength and water retention of the superabsorbent polymer material. However, since the conventional crosslinking agents use at least two unsaturated functional groups and/or epoxy functional groups as the active functional groups, the water absorbency of the superabsorbent polymer material is limited by the molecular weight of the conventional crosslinking agent.

Accordingly, it is necessary to provide a method of manufacturing superabsorbent polymer composition to solve the abovementioned problems.

### SUMMARY

Therefore, an aspect of the present invention is to provide a method of manufacturing a superabsorbent polymer composition. In the method, specific monomers perform a chain-growth polymerization on the active functional groups of the nanometer gel particles made by the same monomers. Thus, water absorbency and water retention of the obtained superabsorbent polymer composition can be further enhanced by the chain-growth polymerization of the polymer.

Another aspect of the present invention is to prove a superabsorbent polymer composition having excellent water absorbency and water retention.

The other aspect of the present invention is to prove a method of manufacturing a modified superabsorbent polymer composition.

The other aspect of the present invention is to prove a modified superabsorbent polymer composition having excellent water retention.

According to the abovementioned aspect of the present invention, the method of manufacturing the superabsorbent polymer composition is provides. First, a water suspension of polyacrylic acid nanometer gel particles is prepared, in which the water suspension of the polyacrylic acid nanometer gel particles contains 3 mg/mL to 5 mg/mL of polyacrylic acid nanometer gel particles, and the particle sizes of the polyacrylic acid nanometer gel particles are in the range of 10 nm to 100 nm.

Then, acrylic acid monomers, an alkaline substance, water, water suspension of the polyacrylic acid nanometer gel particles, thermal decomposition initiator, and redox initiator are mixed to obtain a mixture. A ratio of usage amounts of the acrylic acid monomers, the alkaline substance, the water, the water suspension of the polyacrylic acid nanometer gel particles, the thermal decomposition initiator, and the redox initiator is (0.80 mol ~0.90 mol):(0.6 mol~0.7 mol):(50 mL~100 mL):(8 mL~14 mL):(10 mol~100 mol):(1 mol~10 mol).

Thereafter, a gelation step is performed on the mixture to obtain the superabsorbent polymer composition. The superabsorbent polymer composition includes 36 mole percent to 40 mole % of polyacrylic acid.

In some embodiments of the present invention, the polyacrylic acid nanometer gel particles are obtained by performing a crosslinking step on a gel-reacting solution at 40°C to 80°C for 20 minutes to 60 minutes. The gel-reacting solution includes the acrylic acid monomers, a crosslinking agent, an ionic surfactant, the thermal decomposition initiator, and the water. A ratio of usage amounts of the acrylic acid monomers, the crosslinking agent, the thermal decomposition initiator, and the water of the gel-reacting solution is (10 mmol~50 mmol):(3 mmol~7 mmol):(0.05 mmol~0.50 mmol):(100 mL~300 mL). The usage amount of the abovementioned ionic surfactant is critical micelle concentration (CMC), and an end of the crosslinking agent has an unsaturated double bond.

In some embodiments of the present invention, the molecular weight of the crosslinking agent is 250 to 600.

In some embodiments of the present invention, the method can selectively include a filtration step performed on the water suspension of the polyacrylic acid nanometer gel particles with a 0.4 µm to 0.5 µm filter membrane after the crosslinking step.

In some embodiments of the present invention, the method can selectively include introducing nitrogen to the mixture before the gelation step.

In some embodiments of the present invention, the method can selectively include introducing nitrogen to the gel-reacting solution before the crosslinking step.

In some embodiments of the present invention, the method can selectively include a precipitation step performed on the water suspension of the polyacrylic acid nanometer gel particles with alkali metal salts after the crosslinking step.

In some embodiments of the present invention, the method can selectively include a drying step performed on the polyacrylic acid nanometer gel particles after the crosslinking step.

In some embodiments of the present invention, the method can selectively include a re-dispersing step performed on the polyacrylic acid nanometer gel particles with the water and/or the ionic surfactant after the crosslinking step.

In some embodiments of the present invention, the method can selectively include a grinding step performed on the superabsorbent polymer composition to obtain powders of the superabsorbent polymer composition, and the particle sizes of the powders is 0.06 mm to 1.00 mm.

In some embodiments of the present invention, the method can selectively include a modifying step performed on the superabsorbent polymer composition with a surface treating agent to obtain the modified superabsorbent polymer composition.

In some embodiments of the present invention, the gelation step is performed at 20°C to 25°C for 5 minutes to 15 minutes.

According to the abovementioned aspect of the present invention, a superabsorbent polymer composition is provided. The superabsorbent polymer composition is obtained by the aforementioned method, and the absorption rate in the pure water of the superabsorbent polymer composition is 1000 g/g to 1500 g/g.

According to the abovementioned aspect of the present invention, a method of manufacturing a modified superabsorbent polymer composition is provided. First, a mixture is provided, in which the mixture includes acrylic acid monomers, an alkaline substance, water, a water suspension of the polyacrylic acid nanometer gel particles, thermal decomposition initiator, and redox initiator. The water suspension of the polyacrylic acid nanometer gel particles contains 3 mg/mL to 5 mg/mL of polyacrylic acid nanometer gel particles with particle sizes of in the range of 10 nm to 100 nm, and a ratio of usage amounts of the acrylic acid monomers, the alkaline substance, the water, the water suspension of the polyacrylic acid nanometer gel particles, the thermal decomposition initiator, and the redox initiator is (0.80 mol ~0.90 mol):(0.6 mol~0.7 mol):(50 mL~100 mL):(8 mL~14 mL):(10 mol~100 mol):(1 mol~10 mol).

Then, a gelation step is performed on the mixture to obtain the superabsorbent polymer composition comprising 36 mole percent to 40 mole percent of polyacrylic acid.

Next, a modifying step is performed on the superabsorbent polymer composition with a surface treating agent, so as to obtain the modified superabsorbent polymer composition.

In some embodiments of the present invention, the polyacrylic acid nanometer gel particles are obtained by performing a crosslinking step at 40°C to 80°C for 20 minutes to 60 minutes on a gel-reacting solution comprising the acrylic acid monomers, a crosslinking agent, an ionic surfactant, the thermal decomposition initiator, and the water, a ratio of usage amounts of the acrylic acid monomers, the crosslinking agent, the thermal decomposition initiator, and the water of the gel-reacting solution is (10 mmol~50 mmol):(3 mmol~7 mmol):(0.05 mmol~0.50 mmol):(100 mL~300 mL), a usage amount of the ionic surfactant is critical micelle concentration (CMC), and an end of the crosslinking agent has an unsaturated double bond.

In some embodiments of the present invention, the gelation step is performed at 20°C to 25°C for 5 minutes to 15 minutes.

According to the abovementioned aspect of the present invention, a modified superabsorbent polymer composition is provided. The modified superabsorbent polymer composition is obtained by the aforementioned method, and a sum of the centrifuge retention capacity and absorption against pressure of saline of the modified superabsorbent polymer composition is bigger than 60 g/g.

By applying the superabsorbent polymer composition, the modified superabsorbent polymer composition, and method of manufacturing the same, in which the superabsorbent polymer composition is obtained by having the specific monomers performing chain-growth polymerization on the active functional groups of the nanometer gel particles made by the same monomer, the mass production of the superabsorbent polymer composition can be beneficial, and water absorbency and water retention of the obtained superabsorbent polymer composition can further enhanced, thereby being able to be used in the manufacturing of superabsorbent products.

### BRIEF DESCRIPTION OF THE DRAWINGS

The invention can be more fully understood by reading the following detailed description of the embodiment, with reference made to the accompanying drawings as follows:
FIG. 1 illustrates a flow chart of the method of manufacturing the superabsorbent polymer composition according to the present invention.
FIG. 2 illustrates a curve chart of the particle sizes of the polyacrylic acid nanometer gel particles of the Preparation Example 3 to signal strength.
FIG. 3 illustrates a curve chart of the particle sizes of the polyacrylic acid nanometer gel particles of the Preparation Example 6 to signal strength.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

As mentioned above, the present invention provides a superabsorbent polymer composition, a modified superabsorbent polymer composition, and a method of manufacturing the same. The superabsorbent polymer composition is obtained by having a specific monomer performing a chain-growth polymerization on the active functional groups of the nanometer gel particles that are made of the same monomer. Therefore, the massive production of the superabsorbent polymer composition can be simplified, and water absorbency and water retention of the obtained superabsorbent polymer composition can be further enhanced via chain-growth polymerization of the polymers.

The term "water absorbency" recited herein refers to the ability of the superabsorbent polymer composition to absorb liquid. In some embodiments, the term "liquid" can include but not limited to pure water and/or water solution. In some specific embodiments, the water solution can include but not limited to saltwater, urine, menstrual blood, soil water, or any other water solution in the environment. In some embodiments, the concentration of saltwater is not limited and can be 0.5 %(w/w) to 1.0 %(w/w), for example. In some specific embodiments, the concentration of saltwater can be 0.85 %(w/w) to 1.0 %(w/w), for example. Saltwater with concentrations in this range is also called a saline solution. It is worth noting that salt will negatively affect the water absorbency of the superabsorbent polymer composition. Therefore, the weight of the saline that the superabsorbent polymer composition can absorb is smaller than that of pure water. To simulate real conditions, the water absorbency of the polymer composition can be evaluated by saline solution.

In some embodiments, the water absorbency can be evaluated by an absorption rate. The absorption rate is the ratio value of the weight of a liquid absorbed by the superabsorbent polymer composition to the weight of the superabsorbent polymer composition. In some specific embodiments, the absorption rate can include but not limited to the absorption rate in pure water or the absorption rate in saline.

The term "water retention" recited herein refers to the ability of the superabsorbent polymer composition to retain liquid under external force while or after absorbing liquid. The term "liquid" has been elaborated above and will not be repeated herein. In some embodiments, the water retention can be evaluated by centrifuge retention capacity (CRC) and/or absorption against pressure (AAP).

In some specific embodiments, CRC can be the ratio value of the weight of liquid retained in the superabsorbent polymer composition that has absorbed the liquid and then subjected to centrifuge to the weight of the superabsorbent polymer composition, for example. In the abovementioned specific examples, the liquid can be pure water or saline solution, for example. The condition of the centrifuge is not limited. The rotation speed of the centrifuge can be 1300 rpm to 1800 rpm, for example, and the time of the centrifuge can be 1 minute to 5 minutes, for example.

In some specific embodiments, AAP can be the ratio value of the weight of the liquid absorbed by the superabsorbent polymer composition under pressure to the weight of the superabsorbent polymer composition, for example. In the abovementioned specific examples, the liquid can be pure water or saline, for example. There is no specific limitation on the pressure and can be 0.5 pounds per square inch (psi) to 1.0 psi (e.g., 0.7 psi), for example.

It is noted that CRC and AAP of the superabsorbent polymer composition are negatively related. In other words, the higher the CRC of the superabsorbent polymer composition is, the lower the AAP is. In some embodiments, water retention can be evaluated by "the sum of CRC and AAP". A bigger sum indicates the increased amount of one of the CRC and AAP is bigger than the decreased amount of the other. That is, while one of the CRC and AAP enhances, there is only small negative effect on the other.

The superabsorbent polymer composition obtained by using nanometer gel particles has a high crosslinking level. The crosslinking level can be evaluated by measuring the pH value of 0.9 %(w/w) saline where the superabsorbent polymer composition is immersed. The lower the pH value is, the lower the amount of precipitate is, and the higher the crosslinking level is.

The term "nanometer gel particles" herein refers to particles that have structures of crosslinking systems, are in elastic semi-solid or gel, and have average particle sizes that can be smaller or equal to 100 nm, for example, e.g., 10 nm to 100 nm, or 30 nm to 50 nm. If the average particle size of the nanometer gel particles is too big, the obtained superabsorbent polymer composition has poor water absorbency and water retention.

The abovementioned specific monomers can be monomer compounds including a carboxyl group, for example. The monomer compounds including a carboxyl group can include but not limited to acrylic acid monomer, other proper monomer compounds including carboxyl groups, or any combination of the abovementioned compounds. In some specific embodiments, the acrylic acid monomers can include but not limited to acrylic acid, methacrylic acid, 2-carboxyethyl acrylate, 2-carboxyethyl methacrylate, methyl acrylate and/or ethyl acrylate. In some embodiments, the acrylic acid monomers can selectively include other water-soluble monomers having acid groups and unsaturated double bonds, e.g., 2-propenylamine-2-methylpropanesulfonic acid, cis-butenedioic acid, trans-butenedioic acid, and/or other water-soluble monomers. In the following, acrylic acid monomers are used as examples to explain the superabsorbent polymer composition, the modified superabsorbent polymer composition, and the method of manufacturing the same of the present invention and are not intended to limit the present invention. In other embodiments, the present invention can be performed by other abovementioned specific monomers.

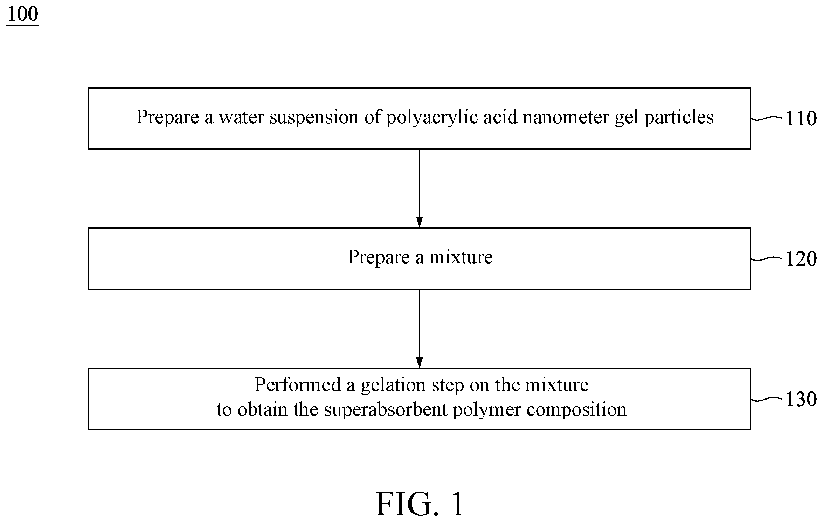

Refer to FIG. 1, which illustrates a flow chart of the method 100 of manufacturing the superabsorbent polymer composition according to the present invention. As shown in step 110 in FIG. 1, water suspension of the polyacrylic acid nanometer gel particles is prepared. The water suspension of the polyacrylic acid nanometer gel particles include polyacrylic acid nanometer gel particles. As mentioned above, the average particle size of the polyacrylic acid nanometer gel particles is in the range of 10 nm to 100 nm, and the concentration is 3 mg/mL to 5 mg/mL. When the amount of the polyacrylic acid nanometer gel particles of the water suspension of the polyacrylic acid nanometer gel particles is too low, the obtained superabsorbent polymer composition has a low crosslinking level, leading to poor water absorbency and water retention. When the amount of the polyacrylic acid nanometer gel particles of the water suspension of the polyacrylic acid nanometer gel particles is too high, water absorption of the superabsorbent polymer composition in a liquid will be negatively affected so that the obtained superabsorbent polymer composition has poor water absorbency and water retention.

In some embodiments, the water suspension of the polyacrylic acid nanometer gel particles is obtained by performing a crosslinking step on a gel-reacting solution. The gel-reacting solution can include but not limited to acrylic acid monomers, a crosslinking agent, an ionic surfactant, a thermal decomposition initiator, and water. In some specific embodiments, the abovementioned water can include but not limited to pure water, deionized water, and/or double distilled water.

The amount of acrylic acid monomers in the gel-reacting solution should be proper so that the polyacrylic acid nanometer gel particles can form and be gel-like. It is worth noting that by adjusting the amount of the acrylic acid monomers, the amount of the active functional groups of the polyacrylic acid nanometer gel particles required by the subsequent chain-growth polymerization can be controlled, thereby further negatively affecting water absorbency and water retention of the superabsorbent polymer composition.

In some embodiments, the crosslinking agent can include but not limited to the compounds having at least one unsaturated double bonds on an end. In some specific embodiments, the crosslinking agent can include but not limited to N,N-methylene-bis-acrylamide (MBA), poly(ethylene glycol) diacrylate (PEGDA), N,N'-bis(2-propenyl)amine, N,N'-methylene dimethacrylamide, propylene acrylate, ethylene glycol diacrylate, ethylene glycol dimethacrylate, polyethylene glycol dimethyl acrylates, glycerin triacrylate, glycerin trimethacrylate, glycerol added ethylene oxide triacrylate, glycerol added ethylene oxide trimethacrylate, trimethylolpropane added ethylene oxide triacrylate ester, trimethylolpropane added ethylene oxide trimethacrylate, trimethylolpropane trimethacrylate, trimethylolpropane triacrylate, N,N,N-tris(2-propenyl)amine, diacrylic acid ethylene glycol esters, polyoxyethylene glyceryl triacrylate, diethylpolyoxyethylene glyceryl triacrylate, and/or dipropylene triethylene glycol ester.

In some embodiments, the crosslinking agent can be a compound having two or more unsaturated epoxy groups, for example. In some specific embodiments, the compound having two or more epoxy groups can include but not limited to sorbitol polyglycidyl ether, polyglycerol polyglycidyl ether, ethylene glycol diglycidyl ether, diethylene glycol diglycidyl ether, polyethylene glycol diglycidyl ether and/or diglycerol polyglycidyl ether.

By controlling the amount of crosslinking agent of the gel-reacting solution, the obtained polyacrylic acid nanometer gel particles can have particle sizes in the specific range. Besides, there is no specific limitation on the molecular weight of the crosslinking agent, but in some embodiments, the molecular weight of the crosslinking agent can be 250 to 600, for example.

The ionic surfactant can include but not limited to an anionic surfactant and/or a cationic surfactant. In some specific embodiments, the anionic surfactants can include but not limited to sulfate salts-based surfactants, sulfonate salts-based surfactants, phosphate salts-based surfactants, and/or other suitable anionic surfactants. The sulfate salts-based surfactants can be higher alcohol sulfate salts, higher alkyl polyglycol ether sulfate salts, alkyl phenyl ether polyglycol ether sulfate salts, styrenated phenol polyglycol ether sulfate salts, and/or polycyclic phenyl ether polyglycol ether sulfate salts, for example. In some specific embodiments, higher alcohol sulfate salts can be sodium dodecyl sulfate, for example. The sulfonate salts-based surfactants can be alkylbenzene sulfonates, polycyclic phenyl ether sulfonates, alkyl sulfonates, and/or dialkyl sulfosuccinates, for example. The phosphate ester salts-based surfactants can be polyethylene glycol nonyl phenyl phosphate, polyoxyethylene alkyl phenyl ether phosphate triethanolamine salt, and/or polyethylene glycol styrenated aryl ether phosphate, for example.

In some specific embodiments, the cationic surfactant can include but not limited to quaternary ammonium salts, and/or other suitable cationic surfactants. The quaternary ammonium salts can be alkyldimethylbenzene quaternary ammonium salts, alkyltrimethyl quaternary ammonium salts, dialkyldimethyl quaternary ammonium salts, ester quaternary ammonium salts, and/or imidazoline quaternary ammonium salt, for example.

In some embodiments, the amount of the ionic surfactant of the gel-reacting solution can be critical micelle concentration (CMC), which is the lowest concentration for forming micelle, for example. The specific value of CMC depends on the kinds of ionic surfactants.

The thermal decomposition initiator can decompose when heated to form free radicals, thereby inducing free radical polymerization. In some embodiments, the thermal decomposition initiator can include but not limited to hydrogen peroxide (i.e., H₂O₂), di-tertiary butyl peroxide, amide peroxide, persulfate (such as ammonium salt, alkali metal salt or the like) and/or azo compound (such as 2,2'-azobis(2-amidinopropane) dihydrochloride, 2,2'-azobis(N,N-dimethyleneisobutyramide) dihydrochloride salt or the like). By adjusting the amount of thermal decomposition initiator, the reactivity of the free radical polymerization can be controlled, thereby controlling the polymerization degree of the obtained polyacrylic acid formed by acrylic acid, so as to ensure the formation of the obtained polyacrylic acid nanometer gel particles into gel.

In some embodiments, the ratio of the acrylic acid monomer, the crosslinking agent, the thermal decomposition initiator, and the water of the gel-reacting solution can be (10 mmol~50 mmol):(3 mmol~7 mmol):(0.05 mmol~0.50 mmol):(100 mL~300 mL), for example.

As mentioned above, the crosslinking step of the gel-reacting solution is initiated by the heat absorption of the thermal decomposition initiator, followed by the generation of the free radical polymerization, so that the acrylic acid monomers and the crosslinking agent are allowed to be subjected to a proper polymerization and a crosslinking reaction to form polyacrylic acid nanometer gel particles. In some specific embodiments, the temperature of the crosslinking step can be 40°C to 80°C, for example, to achieve a better crosslinking level. In some specific embodiments, the duration of the crosslinking step can be 20 minutes to 60 minutes, for example, to decrease residues of the acrylic acid monomer.

In some embodiments, before the crosslinking step, nitrogen can selectively be introduced in the gel-reacting solution to remove oxygen in the gel-reacting solution. Besides, the crosslinking step can be performed in an atmospheric environment, and there is no special need to block oxygen.

In some embodiments, after the crosslinking step, a precipitation step can selectively be performed with alkali metal salt on the water suspension of the polyacrylic acid nanometer gel particles to obtain a precipitate. Therefore, the residues of the acrylic acid monomer, the crosslinking agent, the thermal decomposition initiator, the ionic surfactant, and the redox initiator can be removed. There is no specific limitation on types of alkali metal salt, and the types of alkali metal salt can be alkali metal halide, for example, such as sodium chloride, potassium chloride, sodium bromine, and/or potassium bromine. There is no specific limitation on the usage amount of the alkali metal salt, and the alkali metal salt can be a water solution of the alkali metal salt of 0.5%(w/w) to 1.0%(w/w), i.e., 0.6%(w/w), 0.7%(w/w), 0.8%(w/w), or 0.9%(w/w), for example.

In some embodiments, after the precipitation step, a cleaning step can be selectively performed on the precipitate to further remove residues of the acrylic acid monomer, the crosslinking agent, the thermal decomposition initiator, the ionic surfactant, the redox initiator, and the alkali metal salt. In some embodiments, a drying step can be selectively performed on precipitate for the benefit of transport and storage. In some specific embodiments, the drying step can be a vacuum drying step and/or freeze-drying step.

In some embodiments, the re-dispersing step can be selectively performed on the precipitate to prepare the water suspension of the polyacrylic acid nanometer gel particles. In some specific embodiments, the volume of water used for the re-dispersing step can be the same as that of water used to prepare the gel-reacting solution, for example. In some specific embodiments, the re-dispersing step can be performed with the ionic surfactant whose types and usage amount are the same as that for preparing the gel-reacting solution. In some embodiments, the re-dispersing step can selectively include ultrasound treatment and/or mixing treatment.

Next, the mixture is prepared, as shown in step 120. The mixture can include but not limited to acrylic acid monomers, an alkaline substance, water, and the water suspension of the polyacrylic acid nanometer gel particles obtained in step 110, the thermal decomposition initiator, and a redox initiator.

A portion of the acrylic acid monomers can be neutralized by using the alkaline substance, thereby further enhancing the water absorbency and water retention of the obtained superabsorbent polymer composition. In some embodiments, the alkaline substance can include but not limited to alkali metal compounds, alkaline earth metal compounds, other proper alkaline substances, or any mixture of the abovementioned compounds. In some embodiments, the alkaline substance can include alkaline substances with a hydroxyl group, alkaline substances with a carbonic acid group, other proper alkaline substances, or any mixture of the abovementioned materials. In some specific embodiments, the alkaline substance can include but not limited to sodium hydroxide, potassium hydroxide, magnesium hydroxide, calcium hydroxide, sodium carbonate, potassium carbonate, sodium bicarbonate, and/or potassium bicarbonate. After the portion of acrylic acid monomers are neutralized, the carboxyl functional groups can form sodium, potassium, or ammonium salts, thereby negatively affecting the dissociation of the hydrophilic group of the polyacrylic acid formed subsequently. Therefore, the water absorbency of the superabsorbent polymer composition can be further enhanced.

When the amount of the alkaline substance is too low, the water absorbency and the water retention of the obtained superabsorbent polymer composition cannot be further enhanced. When the amount of the alkaline substance is too high, the amount of the carboxyl functional group of the acrylic acid monomer is too low, and the structure of the obtained superabsorbent polymer composition would be destroyed instead, thereby decreasing the water absorbency and the water retention of the superabsorbent polymer composition.

In some embodiments, the thermal decomposition initiator in the mixture can be the thermal decomposition initiator used to make the polyacrylic acid nanometer gel particles, and will not be repeated herein. In some embodiments, the redox initiator can include but not limited to acidic sulfites, thiosulfates, ascorbates, erythorbates, ferrous salts, sodium bisulfate, and/or ammonium persulfate. It is noted that the redox initiator of the present invention excludes hydrogen peroxide to avoid the reduction of the water absorbency and the water retention of the obtained superabsorbent polymer composition.

The ratio of the usage amount of the acrylic acid monomer, the alkaline substance, the water, the water suspension of the polyacrylic acid nanometer gel particles, the thermal decomposition initiator, and the redox initiator is (0.80 mol ~0.90 mol):(0.6 mol~0.7 mol):(50 mL~100 mL):(8 mL~14 mL):(10 mol~100 mol):(1 mol~10 mol). In the mixture, the concentration of the thermal decomposition initiator is 30 mg/mL to 50 mg/mL. The concentration of the redox initiator is 5 mg/mL to 15 mg/mL.

When the amount of the acrylic acid monomer is not in the range, it is not only difficult to prepare the acrylic acid monomer, but also difficult to control the reaction heat of the subsequent gelation step. As such, the obtained superabsorbent polymer composition has poor mechanical properties and is not conducive to machining. When the usage amounts of the thermal decomposition initiator and the redox initiator are not in the abovementioned ranges, it is hard to control the reactivity of the subsequent gelation step. Thus, the polymerization degree of the obtained superabsorbent polymer composition may be too high, and the obtained superabsorbent polymer composition may become solid.

When the usage amount of the water suspension of the polyacrylic acid nanometer gel particles is too low, the crosslinking level of the obtained superabsorbent polymer composition is too low. When the usage amount of the water suspension of the polyacrylic acid nanometer gel particles is high, it will negatively affect the absorption of the obtained superabsorbent polymer composition in liquid, leading to poor water absorbency and water retention of the superabsorbent polymer composition.

After step 120, a gelation step is performed on the mixture, as shown in step 130, to obtain the superabsorbent polymer composition. The superabsorbent polymer composition include the polyacrylic acid of 36 mole percent to 40 mole percent. Since the mixture includes the thermal decomposition initiator and the redox initiator, the gelation step can be performed rapidly at room temperature. The room temperature is 20°C to 25°C. The term "performed rapidly" refers to a required reacting duration of 5 minutes to 15 minutes. The redox initiator can decompose and form free radicals at first to induce the first stage of free radical polymerization, thereby inducing the acrylic acid monomer to perform chain-growth polymerization on the active functional groups of the polyacrylic acid nanometer gel particles. In the meanwhile, the reaction heat formed by the first stage of free radical polymerization can cause the decomposition of the thermal decomposition initiator, thereby inducing the second stage of free radical polymerization. Thus, the gelation of the obtained superabsorbent polymer composition can be completed.

In some embodiments, before the gelation step shown in step 130 is performed, nitrogen can be selectively introduced to the mixture to further remove oxygen from the mixture. However, like the crosslinking step, it is not necessary to block oxygen in the gelation step shown in step 130.

In the abovementioned method, the acrylic acid monomers can perform a chain-growth polymerization on the active functional groups of the obtained polyacrylic acid nanometer gel particles formed from acrylic acid monomer. Therefore, the distances between the polyacrylic acid nanometer gel particles increase, and the obtained superabsorbent polymer composition has a penetrating honeycomb-like (or sponge-like) structure, and the water absorbency and water retention can be increased. Moreover, the water absorbency and water retention of the superabsorbent polymer composition are also related to the amount of the active functional groups on the surface of the polyacrylic acid nanometer gel particles as well as the amount and the distant of the polyacrylic acid nanometer gel particles. Thus, the absorbency and water retention of the superabsorbent polymer composition will not be limited by the molecular weight of the crosslinking agent and can therefore increase.

As experimental results have proved, the abovementioned method can enhance the water absorbency of the superabsorbent polymer composition. In some embodiments, the absorption rate of the superabsorbent polymer composition in pure water is 1000 g/g to 1500 g/g, i.e., 1200 g/g to 1500 g/g, for example. In some embodiments, the absorption rate of the superabsorbent polymer composition in 0.9 %(w/w) saline can be bigger than or equal to 75 g/g, or bigger than 100 g/g to 150 g/g.

Moreover, as experimental results have proved, the abovementioned method can enhance the water retention of the superabsorbent polymer composition. In some embodiments, the CRC of the superabsorbent polymer composition in 0.9 %(w/w) saline can be bigger than 40 g/g, e.g., 50 g/g to 100 g/g, for example. In some embodiments, the AAP under a pressure of 0.7 pounds per square inch (psi) (abbreviated as AAP in the following) can be 20 g/g to 50 g/g, e.g., 20 g/g to 30 g/g, for example. In some embodiments, the "sum of CRC and 0.7 AAP" of the superabsorbent polymer composition in 0.9 %(w/w) saline is be bigger than 60 g/g, i.e., bigger than 65 g/g to 80 g/g, for example.

In addition, as experimental results have proved, the abovementioned method can enhance the crosslinking level in the obtained superabsorbent polymer composition, so that the pH value of the saline where the superabsorbent polymer composition immerses is smaller than 6.1, or 5.9, for example.

In some embodiments, after the crosslinking step, the filtration step can be selectively performed on the water suspension of the polyacrylic acid nanometer gel particles to remove the micelle of submicron-sized (about 100 nm to 200 nm), thereby further enhancing the water retention of the superabsorbent polymer composition. There is no specific limitation on the method of the aforementioned filtration step, which can be performed by using a filter membrane with a pore size of 0.4 µm to 0.5 µm.

As experimental results have proved, compared to the polyacrylic acid nanometer gel particles not subjected to the filtration step, the polyacrylic acid nanometer gel particles subjected to the filtration step can obtain a superabsorbent polymer composition with better 0.7 AAP and "sum of CRC and 0.7 AAP". In some embodiments, the 0.7 AAP of the superabsorbent polymer composition obtained from the polyacrylic acid nanometer gel particles subjected to the filtration step can be bigger than 25 g/g to 30g/g in 0.9 %(w/w) saline, for example. In some embodiments, the "sum of CRC and 0.7 AAP" of the superabsorbent polymer composition obtained by the polyacrylic acid nanometer gel particles subjected to the filtration step can be 75 g/g to 80 g/g in 0.9 %(w/w) saline, for example.

In some embodiments, after step 130, the modifying step can be selectively performed on the superabsorbent polymer composition so that the surface of the superabsorbent polymer composition is further bridged, thereby obtaining the modified superabsorbent polymer composition. Compared to the superabsorbent polymer composition, the modified superabsorbent polymer composition has a better water retention. In some embodiments, the modifying step can include but not limited to mixing the surface treating agent and the superabsorbent polymer composition, followed by a reaction for 0.5 hours to 1.5 hours at 140°C to 160°C.

The modifying step can be performed by using the surface treating agent that can react with the carboxyl group of the polyacrylic acid. In some embodiments, the surface treating agent can include but not limited to polyols, polyamines, compounds having at least two epoxy groups, alkylene carbonate, other suitable compounds, or any combination of the abovementioned materials. In some specific embodiments, polyols can include but not limited to glycerol, ethylene glycol, diethylene glycol, triethylene glycol, polyethylene glycol, propylene glycol, 1,4-butanediol. Polyamines can include but not limited to ethylenediamine, diethylenediamine, and/or triethylenediamine. In some specific embodiments, the compounds having at least two epoxy groups can include but not limited to sorbitol polyglycidyl ether, polyglycerol polyglycidyl ether, ethylene glycol diglycidyl ether, diethylene glycol diglycidyl ether, polyethylene glycol diglycidyl ether and/or diglycerol polyglycidyl ether. In some specific embodiments, the alkylene carbonate may include ethylene glycol carbonate, 4-methyl-1,3-dioxolan-2-one, 4,5-dimethyl-1,3-dioxolan-2-one, 4,4-dimethyl-1,3-dioxolan-2-one, 4-ethyl-1,3-dioxolan-2-one, 1,3-dioxan-2-one, 4,6-dimethyl-1,3-dioxane-2-keto and/or 1,3-dioxepan-2-one.

Based on the form of the surface treating agent, the surface treating agent can be added to the superabsorbent polymer composition directly, or be prepared as a surface treating agent solution at first, and then added to the superabsorbent polymer composition. The surface treating agent solution can be prepared by using water or hydrophilic organic solvent (such as methanol, ethanol, propanol, isobutanol, acetone, methyl ether, and/or ethyl ether). In some specific embodiments, the surface treating agent solution can include but not limited to polyethylene glycol diglycidyl ether, propylene glycol, and water. The weight ratio of the polyethylene glycol diglycidyl ether, the propylene glycol, and the water can be (0.3~1):(5~1 0):(8~15), e.g., (0.3-0.7):(5-8):(10-15), for example.

In some embodiments, the weight ratio of the surface treating agent and the superabsorbent polymer composition can be (0.30~0.45):(2.50~3.50), e.g., (0.32-0.45):(2.90-3.10), for example, to achieve a proper level of modification.

As experimental results have proved, the CRC of the modified superabsorbent polymer composition in saline can be bigger than 40 g/g to 55 g/g, for example. In some embodiments, the 0.7 AAP of the modified superabsorbent polymer composition in 0.9 %(w/w) saline can be 20 g/g to 25 g/g, for example. In some embodiments, the "sum of CRC and 0.7" of the modified superabsorbent polymer composition in 0.9 %(w/w) saline can be bigger than 60, e.g., 65 to 75, for example.

In some embodiments, after step 130, a grinding step can be selectively performed on the superabsorbent polymer composition to obtain powders of the superabsorbent polymer composition. In some embodiments, the particle sizes of the powders of the superabsorbent polymer composition can be 0.06 mm to 1.00 mm, or 0.10 mm to 0.85 mm, for example, to achieve a better amount of fine powders and water absorbency.

Several embodiments are described below to illustrate the application of the present invention.

### Embodiment 1. Evaluating water absorbency and reactivity of superabsorbent polymer compositions made by a crosslinking agent and nanometer gel particles

### Preparation Example 1

Firstly, a gel-reacting solution was obtained by mixing 32 mmol of acrylic acid monomer, 5.8 mmol of poly(ethylene glycol) diacrylate (PEGDA), sodium dodecyl sulfate (in the form of a water solution with a concentration of 0.09 g/45 mL), 0.078 mmol of persulfate oxidizing agent, and 300 mL of water. Then, a hydrogel solution was obtained by performing a crosslinking step on the gel-reacting solution at 60°C for 30 minutes. A 0.1 g, 5 mL of water solution of sodium chloride was used to perform a participation step on the hydrogel solution, thereby obtaining a precipitate. After the precipitate was washed by water, the precipitate was re-dispersed in 300 mL of water to obtain water suspension of the polyacrylic acid nanometer gel particles.

A sodium hydroxide water solution was obtained by adding 80 mL water in 0.64 mol of sodium hydroxide. After cooling down to a temperature of 0°C to 10°C, the sodium hydroxide water solution was added with 0.83 mol, 60 mL of acrylic acid monomer to obtain a solution of neutralized acrylic acid. Next, the solution of neutralized acrylic acid was added with 12 mL of the abovementioned water suspension of the polyacrylic acid nanometer gel particles (with a concentration of about 3 mg/mL to 5 mg/mL), 1.7 mL, 50 mg/mL of persulfate oxidizing agent, and 0.3mL, 10 mg/mL of sodium erythorbates to obtain a mixture. Then, nitrogen was introduced into the mixture to remove oxygen from the mixture, gelation was performed at 20°C to 25°C to obtain a superabsorbent polymer composition.

Then, the superabsorbent polymer composition was chopped with a cutting mill and then sieved with a sieve to obtain a gel with a particle size smaller than or equal to 2 mm. After a drying step was performed on the superabsorbent polymer composition for 2 hours at 130°C, a sieve was used to obtain a powder of gel of the Preparation Example 1 with a particle size of 0.10 mm to 0.85 mm.

### Comparative Example 1

A powder of gel of Comparative Example 1 was the powder of gel of FPC BC8000 manufactured by Formosa Plastics Corporation, in which FPC BC8000 had the crosslinking reaction used by MBA.

The powders of gels of the Preparation Example 1 and Comparative Example 1 were respectively tested for the absorption rate in pure water, absorption rate in saline, centrifuge retention capacity (CRC) in saline, 0.7 psi absorption against pressure (abbreviated as 0.7 AAP), and pH of saline where the powders of gels submerged. The results were recorded in Table 1.

The abovementioned absorption rate in pure water was obtained by measuring the weight of the powders of gels after the 0.1 g of powders of gels were submerged in 400 mL of water for 30 minutes, followed by calculating the ratio (unit:g/g) of the difference of the weight of the powders of gels absorbing water and that of the powders of gels not absorbing water (i.e., 0.1 g) to the weight of the powders of gels not absorbing water (i.e., 0.1 g).

The abovementioned absorption rate in saline was obtained by measuring the weight of the powders of gels after submerged in 400 mL of 0.9 %(w/w) saline for 30 minutes, followed by calculating the ratio (unit: g/g) of the difference of the weight of the powders of gels absorbing saline and that of the powders of gels not absorbing saline (i.e., 0.1 g) to the weight of the powders of gels not absorbing saline (i.e., 0.1 g).

The abovementioned CRC in saline was obtained by calculating the ratio of the weight of 0.1 g of the powders of gels subjected to a submerging treatment and centrifuging treatment to that of the powders of gels not subjected to the submerging treatment and the centrifuging treatment. The submerging treatment was performed by submerging the powders of gels in 0.9 %(w/w) saline for 30 minutes, and the centrifuging treatment was performed on the powders of gels subjected to the submerging treatment at a rotation rate of 1500 rpm for 3 minutes.

The abovementioned 0.7 AAP in saline was obtained by calculating the ratio of the difference of the weight of the 0.9 g of powders of gels subjected to an absorption against pressure treatment for 1 hour and that of the powders of gels not subjected to the absorption against pressure treatment (i.e., 0.9 g) to the ratio of the weight of powders of gels not subjected to the absorption against pressure treatment. The absorption against pressure treatment was performed by exerting a pressure of 0.7 pounds per square inch (psi) on the powders of gels while the powders of gels were submerged in 0.9 %(w/w) saline.

The abovementioned pH of saline where the powders of gels submerged was obtained by measuring the pH of saline with a pH meter after submerging the powders of gels in 0.9 %(w/w) saline.

**Table 1**

| Evaluation items | | Comparative Example 1 | Preparation Example 1 |
|---|---|---|---|
| Pure water | Absorption rate (g/g) | 650 | 1200-1500 |
| Saline | Absorption rate (g/g) | 72 | 115-125 |
| | CRC (g/g) | 48 | 90 |
| | pH of saline where the powders of gels submerged | 6.10 | 6.01 |

As shown in Table 1, compared to Comparative Example 1, the powders of gels of Preparation Example 1 had a higher absorption rate in pure water as well as higher absorption rate and CRC in saline. In detail, the powders of gels of Preparation Example 1 had an absorption rate in pure water that is 1.85 times to 2.30 times that of Comparative Example 1, an absorption rate in saline that is 1.60 times to 1.74 times that of Comparative Example 1, and a CRC in saline that is 1 times to 1.88 times of that of Comparative Example 1. Moreover, the saline where the powders of gels of Preparation Example 1 submerged had a pH lower than that of the saline where the powders of gels of Comparative Example 1 submerged. In other words, the powders of gels of Preparation Example 1 had a lower amount of acrylic acid monomer that was crosslinked incompletely, indicating there was a better reactivity in Preparation Example 1.

### Embodiment 2. Evaluating effects of different modified levels on water absorbency of powders of gels

### Preparation Example 2

At 150°C, 5 g of surface treating agent was used to perform a modifying step on 200 g of the powders of gels of Preparation Example 1 for 1 hour to obtain modified powders of gels. The surface treating agent was mixed with polyethylene glycol diglycidyl ether (n=22, CAS RN: 26403-72-5), propylene glycol, and water in a ratio of 0.3:8:15.

### Preparation Examples 3 to 5

Modified powders of gels of Preparation Examples 3 to 5 were made by the method same as Preparation Example 2. Taking the volume ratio of the surface treating agent of Preparation Example 2 and the powders of gels of Preparation Example 1 (0.36 : 2.90) as the modifying rate of 1, the modifying rates of Preparation Examples 3 to 5 were 0.75, 0.68, and 0.5, respectively.

### Comparative Example 2

The modified powders of gels of Comparative Example 2 and that of Comparative Example 1 were obtained with the method that was the same as Preparation Example 2.

### Comparative Examples 3 to 5

The modified powders of gels of Comparative Example 3 were obtained by subjecting the powders of gels MAX2000 (manufactured by Evonik Industries AG) to a modifying step. The modified powders of gels of Comparative Example 4 were obtained by subjecting the powders of gels CAW2020 (manufactured by Nippon Shokubai Co., Ltd.) to a modifying step. The modified powders of gels of Comparative Example 5 were obtained by subjecting the powders of gels M7055 (BASF AG) to a modifying step.

The modified powders of gels of the Preparation Examples 2 to 5, and Comparative Example 2 were respectively tested for their absorption rate in pure water, absorption rate, CRC, 0.7 AAP, "sum of CRC and 0.7 AAP" in saline, and pH of saline where the powders of gels submerged. The modifying rates and results were recorded in Table 2. Moreover, the modified powders of gels of Comparative Examples 2 to 5 were tested for their CRC, AAP, and "sum of CRC and 0.7 AAP". The results were compared to that of Preparation Example 3 and recorded in Table 3.

**Table 2**

| Evaluation items | | Comparative Example | Preparation Example | | | |
|---|---|---|---|---|---|---|
| | | 2 | 2 | 3 | 4 | 5 |
| Modifying rate | | 1.00 | 1.00 | 0.75 | 0.68 | 0.50 |
| Pure water | Absorption rate (g/g) | 350 | 1010 | 1119 | 1145 | 1020 |
| Saline | Absorption rate (g/g) | 60.0 | 75.0 | 79.4 | 82.5 | 80.0 |
| | CRC (g/g) | 33.40 | 44.00 | 50.70 | 49.40 | 48.95 |
| | 0.7 AAP (g/g) | 21.0 | 22.0 | 20.3 | 21.2 | 21.0 |
| | Sum of CRC and 0.7 AAP (g/g) | 55.40 | 66.00 | 71.00 | 70.60 | 69.95 |
| | pH of saline where the powders of gels submerged | 6.01 | 5.96 | 5.98 | 5.97 | 5.97 |

As shown in Tables 1 and 2, compared to Comparative Example 1, the modified powders of gels of Comparative Example 2 had higher absorption rate in pure water, absorption rate, and CRC in saline, indicating that the modifying step would decrease the absorption rate in pure water as well as absorption rate and CRC in saline of modified powders of gels.

Moreover, compared to Comparative Example 2, the modified powders of gels of Preparation Examples 2 to 5 had higher absorption rates in pure water, absorption rates, and CRC in saline, indicating that when the modified rates were 0.5 to 1, the obtained modified powders of gels could still have excellent water absorbency. It is noted that typically, CRC and AAP were antagonistic. In other words, the higher the CRC was, the lower the AAP was. However, compared to Comparative Example 2, the modified powders of gels of Preparation Examples 2 to 5 had enhanced CRC, but AAP did not decrease dramatically, so the "sums of CRC and 0.7 AAP" were bigger, indicating a better water retention.

**Table 3**

| Evaluation items | Comparative Examale | | | | Preparation Example 3 |
|---|---|---|---|---|---|
| | 2 | 3 | 4 | 5 | |
| CRC (g/g) | 37 | 37 | 39 | 36 | 50.7 |
| 0.7 AAP (g/g) | 21 | 21 | 20 | 23 | 20.3 |
| Sum of CRC and 0.7 AAP (g/g) | 58 | 58 | 59 | 59 | 71 |

As shown in Table 3, compared to the modified powders of gels made by the commercially available powders of gels (Comparative Examples 2 to 5), the modified powders of gels of Preparation Example 3 had higher CRC, but AAP did not decrease dramatically, and was even higher than that of Comparative Example 4. Therefore, the modified powders of gels of Preparation Example 3 had a higher "sum of CRC and 0.7 AAP".

### Embodiment 3. Evaluating whether filtration effect water absorbency of powders of gels

### Preparation Example 6

The method to manufacture the modified powders of gels of Preparation Example 6 was the same as that of Preparation Example 3 but was different in that the water suspension of the polyacrylic acid nanometer gel particles of Preparation Example 6 was subjected to a filtration step with a 0.45 µm filter membrane before mixing with the neutralized acrylic acid solution.

Dynamic Light Scattering (DLS) was used to measure the particle sizes of the polyacrylic acid nanometer gel particles of Preparation Examples 3 and 6.

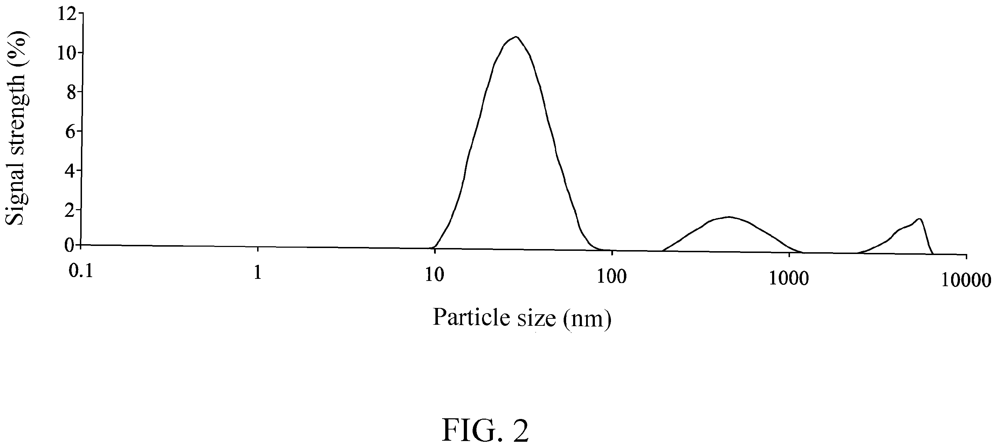

FIG. 2 illustrates a curve chart of the particle size of the polyacrylic acid nanometer gel particles of the Preparation Example 3 to signal strength. The x-axis represented particle size (unit: nm), and the y-axis represented signal strength (unit: %). As shown in FIG. 2, most of the polyacrylic acid nanometer gel particles of Preparation Example 3 had particle sizes distributed in a range of 10 nm to 100 nm. However, there were some polyacrylic acid submicron-sized gel particles having particle sizes reaching 200 nm, and even 1000 nm.

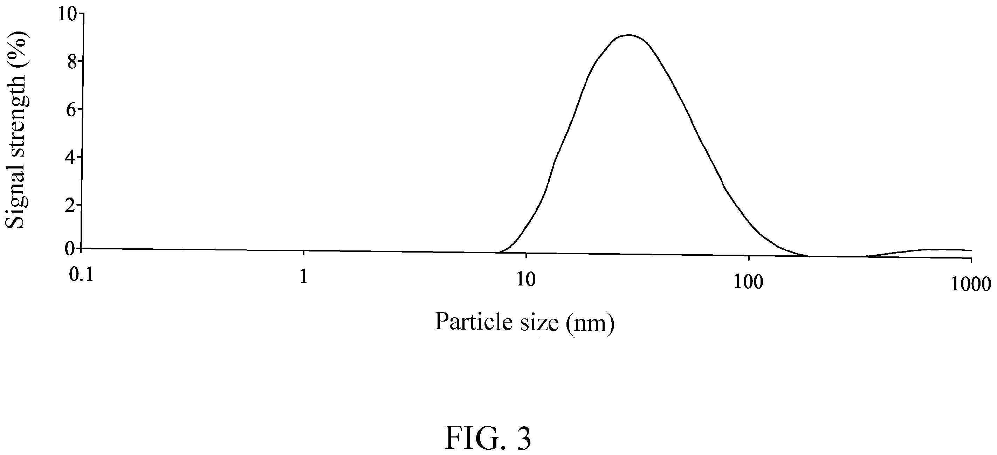

FIG. 3 illustrates a curve chart of the particle size of the polyacrylic acid nanometer gel particles of the Preparation Example 6 to signal strength. The x-axis represented particle size (unit: nm), and the y-axis represented signal strength (unit: %). As shown in FIG. 3, most of the polyacrylic acid nanometer gel particles of Preparation Example 6 had particle sizes distributed in a range of 10 nm to 100 nm. Moreover, compared to Preparation Example 3, the amount of the polyacrylic acid submicron-sized gel particles of Preparation Example 6 with particle sizes bigger than 100 nm dropped dramatically.

Next, the modified powders of gels of Preparation Example 6 were tested for the absorption rate in pure water as well as absorption rate, CRC, 0.7 AAP, "sum of CRC and 0.7 AAP" in saline, and pH of saline where the modified powders of gels submerged. The results were compared with that of Preparation Example 3 and recorded in Table 4.

**Table 4**

| Evaluation items | | Preparation Example | |
|---|---|---|---|
| | | 3 | 6 |
| Pure water | Absorption rate (g/g) | 1119 | 1248 |
| Saline | Absorption rate (g/g) | 79.4 | 77.0 |
| | CRC (g/g) | 50.7 | 49.4 |
| | 0.7 AAP (g/g) | 20.3 | 27.0 |
| | Sum of CRC and 0.7 AAP | 71.0 | 76.4 |

As shown in Table 4, compared to Preparation Example 3, the modified powders of gels of Preparation Example 6 in pure water had an enhanced absorption rate. Although the CRC decreased slightly, the increase in 0.7 AAP enhanced the "sum of CRC and 0.7 AAP", indicating that by performing the filtration step on the water suspension of the polyacrylic acid nanometer gel particles, the obtained modified powders of gels could have better water retention. Combining the results shown in FIGs. 2 and 3, the effects of the filtration step on AAP could result from the removal of the submicron-sized polyacrylic acid gel particles via the filtration step. It is noted that the submicron-sized polyacrylic acid gel particles could negatively affect the uniformity of the crosslinking reaction, resulting in differences in the stress among particles in the dispersion phase, thereby negatively affecting AAP.

In is noted that, the superabsorbent polymer composition having a sum of CRC and 0.7 AAP of 65 g/g to 80 g/g can also be obtained by using a surface treating agent obtained by mixing other compounds having at least two epoxy groups and other polyols with a ratio of (0.3~1):(5~10):(8~15), and by using the surface treating agent and the superabsorbent polymer composition with a weight ratio of (0.30~0.45):(2.50~3.50), for example.

Based on the aforementioned Embodiments, in the superabsorbent polymer composition and the method of manufacturing the same of the present invention, the advantage is to have the specific monomer performing chain-growth polymerization on the active functional groups of the nanometer gel particles made by the same monomer, such that water absorbency and water retention of the obtained superabsorbent polymer composition enhanced. The superabsorbent polymer composition can be used to make superabsorbent products and can be applied in the manufacturing of hygiene products (such as baby diapers, sanitary products, disposable wipes and/or adult diapers), agriculture (such as water retaining agents and/or fertilizer retaining agents), food (such as packages of fresh food), environmental engineering (such as flood bags), building material (such as anti-dew condensation agents) and/or oil gathering (such as water remover).

## Claims

1. A method of manufacturing a superabsorbent polymer composition, **characterized by**:
providing a water suspension of polyacrylic acid nanometer gel particles, wherein the water suspension of the polyacrylic acid nanometer gel particles comprises 3 mg/mL to 5 mg/mL of polyacrylic acid nanometer gel particles, and particle sizes of the polyacrylic acid nanometer gel particles are 10 nm to 100 nm;
mixing acrylic acid monomers, an alkaline substance, water, the water suspension of the polyacrylic acid nanometer gel particles, thermal decomposition initiator, and redox initiator, wherein a ratio of usage amounts of the acrylic acid monomers, the alkaline substance, the water, the water suspension of the polyacrylic acid nanometer gel particles, the thermal decomposition initiator, and the redox initiator is (0.80 mol ~0.90 mol):(0.6 mol~0.7 mol):(50 mL~100 mL):(8 mL~14 mL):(10 mol~100 mol):(1 mol~10 mol), so as to obtain a mixture; and
performing a gelation step on the mixture to obtain the superabsorbent polymer composition, wherein the superabsorbent polymer composition comprises 36 mole percent to 40 mole percent of polyacrylic acid.

2. The method of claim 1, wherein the polyacrylic acid nanometer gel particles are obtained by performing a crosslinking step on a gel-reacting solution at 40°C to 80°C for 20 minutes to 60 minutes, the gel-reacting solution comprises the acrylic acid monomers, a crosslinking agent, an ionic surfactant, the thermal decomposition initiator, and the water, a ratio of usage amounts of the acrylic acid monomers, the crosslinking agent, the thermal decomposition initiator, and the water of the gel-reacting solution is (10 mmol~50 mmol):(3 mmol~7 mmol):(0.05 mmol~0.50 mmol):(100 mL~300 mL), a usage amount of the ionic surfactant is critical micelle concentration (CMC), and an end of the crosslinking agent has an unsaturated double bond.

3. The method of claim 2, wherein a molecular weight of the crosslinking agent is 250 to 600.

4. The method of claim 2 or claim 3, further comprising a filtration step performed on the water suspension of the polyacrylic acid nanometer gel particles with a 0.4 µm to 0.5 µm filter membrane after the crosslinking step.

5. The method of any of claims 2 to 4, further comprising introducing nitrogen to the mixture before the gelation step.

6. The method of any of claims 2 to 5, further comprising introducing nitrogen to the gel-reacting solution before the crosslinking step.

7. The method of any of claims 2 to 6, further comprising a precipitation step performed on the water suspension of the polyacrylic acid nanometer gel particles with alkali metal salts after the crosslinking step.

8. The method of any of claims 2 to 7, further comprising a drying step performed on the polyacrylic acid nanometer gel particles after the crosslinking step.

9. The method of any of claims 2 to 8, further comprising a re-dispersing step performed on the polyacrylic acid nanometer gel particles with the water and/or the ionic surfactant after the crosslinking step.

10. The method of claim 1 or claim 2, further comprising a grinding step performed on the superabsorbent polymer composition to obtain powders of the superabsorbent polymer composition, wherein particle sizes of the powders are 0.06 mm to 1.00 mm.

11. The method of claim 1 or claim 2, further comprising a modifying step performed on the superabsorbent polymer composition with a surface treating agent, so as to obtain a modified superabsorbent polymer composition.

12. The method of any one of claims 1 to 11, wherein the gelation step is performed at 20°C to 25°C for 5 minutes to 15 minutes.

13. A superabsorbent polymer composition, **characterized by** the superabsorbent polymer composition is obtained by methods of any one of claims 1 to 12, wherein an absorption rate of the superabsorbent polymer composition in pure water is 1000 g/g to 1500 g/g.

14. A method of manufacturing a modified superabsorbent polymer composition, **characterized by**:
providing a mixture comprising acrylic acid monomers, an alkaline substance, water, a water suspension of a polyacrylic acid nanometer gel particles, thermal decomposition initiator, and redox initiator, wherein the water suspension of the polyacrylic acid nanometer gel particles comprises 3 mg/mL to 5 mg/mL of polyacrylic acid nanometer gel particles with particle sizes of 10 nm to 100 nm, and a ratio of usage amounts of the acrylic acid monomers, the alkaline substance, the water, the water suspension of the polyacrylic acid nanometer gel particles, the thermal decomposition initiator, and the redox initiator is (0.80 mol ~0.90 mol):(0.6 mol~0.7 mol):(50 mL~100 mL):(8 mL~14 mL):(10 mol~100 mol):( 1 mol~10 mol);
performing a gelation step on the mixture to obtain a superabsorbent polymer composition comprising 36 mole percent to 40 mole percent of polyacrylic acid; and
performing a modifying step on the superabsorbent polymer composition with a surface treating agent, so as to obtain the modified superabsorbent polymer composition.

15. The method of claim 14, wherein the polyacrylic acid nanometer gel particles are obtained by performing a crosslinking step at 40°C to 80°C for 20 minutes to 60 minutes on a gel-reacting solution comprising the acrylic acid monomers, a crosslinking agent, an ionic surfactant, the thermal decomposition initiator, and the water, a ratio of usage amounts of the acrylic acid monomers, the crosslinking agent, the thermal decomposition initiator, and the water of the gel-reacting solution is (10 mmol~50 mmol):(3 mmol~7 mmol):(0.05 mmol~0.50 mmol):(100 mL~300 mL), a usage amount of the ionic surfactant is critical micelle concentration (CMC), and an end of the crosslinking agent has an unsaturated double bond.

16. The method of claim 14, wherein the gelation step is performed at 20°C to 25°C for 5 minutes to 15 minutes.

17. A modified superabsorbent polymer composition, **characterized by** the modified superabsorbent polymer composition is obtained by methods of any one of claims 14 to 16, wherein a sum of centrifuge retention capacity and absorption against pressure of the modified superabsorbent polymer composition is bigger than 60 g/g.
